# FASCICULE DE BREVET EUROPEEN

(11) **EP 0 858 420 B1**
(45) Date de publication et mention de la délivrance du brevet: **18.08.1999**
(21) Numéro de dépôt: 96934964.6
(22) Date de dépôt: 24.10.1996
(51) Int. Cl.: B65D 83/14, F16K 25/00

(54) **TIGE DE SOUPAPE A FAIBLES FROTTEMENTS**
VENTILSCHAFT MIT NIEDRIGER REIBUNG
LOW-FRICTION VALVE STEM

(30) Priorité: 31.10.1995 FR 9512840
(43) Date de publication de la demande: 19.08.1998
(73) Titulaire: VALOIS S.A., 27110 Le Neubourg (FR)
(72) Inventeur: DI GIOVANNI, Patrick, F-76165 La Londe (FR); WILLIAMS, Géralt, F-27110 Le Neubourg (FR)
(74) Mandataire: CAPRI SARL
(86) Numéro de dépôt international: FR9601663
(87) Numéro de publication internationale: WO9716360

(56) Documents cités:
- EP-A- 0 642 992
- DE-A- 2 646 149
- FR-A- 2 713 299

## Description

La présente invention concerne une valve améliorée et plus particulièrement une tige de soupape de valve doseuse.

Les valves sont bien connues dans l'état de la technique, voir, par example, le EP 642 992 A. Elles trouvent leur application principale avec des récipients aérosols pour la distribution de produits liquides chargés d'un propulseur (gaz dissous sous pression). Lorsqu'elle sont doseuses, les valves comportent généralement un corps de valve renfermant une chambre de dosage délimitée axialement par deux joints annulaires, un joint de soupape et un joint de chambre, et une tige de soupape mobile entre une position de repos et une position d'actionnement. Cette tige de soupape est sollicitée par un ressort vers sa position de repos, dans laquelle un épaulement de ladite tige s'appuie sur la surface inférieure dudit joint de soupape. Pour actionner la valve doseuse, on appuie sur la tige de soupape qui coulisse dans le corps de valve à l'intérieur des joints annulaires jusqu'à sa position d'actionnement, dans laquelle une dose du produit est expulsée. Ce ressort ramène alors la tige de soupape dans sa position de repos.

Un problème qui se pose avec les tiges de soupape des valves, en particulier des valves doseuses, concerne notamment l'étanchéité au niveau du joint de soupape. D'une part, il faut que la tige de soupape puisse coulisser entre sa position d'actionnement et sa position de repos sous l'effet du ressort, tout en empêchant que des fuites ne se produisent. D'autre part, il faut que dans la position de repos de la tige de soupape, l'étanchéité soit totale malgré la pression régnant à l'intérieur de la chambre de dosage et du récipient.

Pour résoudre ces problèmes, les valves connues comportent une tige de soupape cylindrique ayant en prolongement dudit épaulement, au moins sur la portion de la tige de soupape qui coulisse dans le joint de soupape, un diamètre extérieur constant environ égal (en général très légèrement supérieur) au diamètre extérieur de l'ouverture centrale du joint de soupape. Pour garantir l'étanchéité dans la position de repos, il est généralement prévu une partie tronconique adjacente audit épaulement et qui s'étend axialement sur une partie de l'épaisseur dudit joint de soupape. Ainsi, la tige de soupape coulisse avec flottements dans le joint de soupape, la force exercée par le ressort étant supérieur auxdits frottements, et, dans sa position de repos, la partie tronconique adjacente audit épaulement participe à l'étanchéité au niveau du joint de soupape.

Un inconvénient de cette mise en oeuvre réside dans le fait que les flottements qui apparaissent lors du coulissement de la tige de soupape peuvent être relativement importants, ce qui peut entraîner un blocage de ladite tige de soupape.

Ce phénomène est encore amplifié lorsque, notamment pour des raisons écologiques, on souhaite remplacer les gaz propulseurs nocifs pour l'environnement, tel que les CFC, par des gaz propulseurs qui ne sont pas, ou moins nocifs pour l'environnement, tel que par exemple les gaz HFA. Or, l'utilisation de tels gaz peu ou pas nocifs implique une augmentation importante de la pression à l'intérieur du corps de valve, cette augmentation pouvant aller jusqu'à 50%. Il est donc nécessaire de réaliser une étanchéité encore supérieure au niveau du joint de soupape, ce qui implique un frottement important entre la tige de soupape et ledit joint.

Une solution possible pour surmonter cet inconvénient est de prévoir un ressort ayant une raideur suffisamment élevée. Ceci nécessite toutefois une force importante pour actionner la valve doseuse, ce qui n'est pas souhaitable.

Une autre solution consiste à revêtir les tiges de soupapes avec une couche de silicone pour améliorer ses qualités de friction. Cette solution est relativement satisfaisante avec des gaz propulseurs tels que des CFC, mais n'est pas suffisante lorsque des gaz HFA sont utilisés. En effet, ces gaz HFA expulsent au fur et à mesure le silicone, de sorte qu'après un certain nombre d'utilisation, le problème de blocage de la tige de soupape réapparaît.

Un but de l'invention est de fournir une valve, en particulier une valve doseuse ayant une tige de soupape réalisée de telle façon à éviter un blocage intempestif de celle-ci par frottement sur le joint de soupape, lorsque ladite tige de soupape se déplace de sa position d'actionnement vers sa position de repos sous l'action du ressort, tout en assurant l'étanchéité au niveau dudit joint de soupape lors de ce déplacement.

Un autre but de l'invention est de fournir une valve, en particulier une valve doseuse comportant une tige de soupape réalisée de telle façon à pouvoir fonctionner de manière fiable et sure avec un ressort de faible raideur, facilitant ainsi son actionnement.

Encore un autre but de l'invention est donc de fournir une valve, en particulier une valve doseuse fonctionnant avec un gaz propulseur non nocif pour l'environnement, ladite valve comportant une tige de soupape pouvant coulisser sans fuite et sans risque de blocage entre sa position d'actionnement et sa position de repos sous l'effet du ressort.

L'invention a donc pour objet un dispositif de valve destinée à être montée dans l'ouverture du col d'un récipient contenant du produit à distribuer, comportant un corps de valve renfermant une chambre délimitée axialement d'un côté par un joint de soupape annulaire, ledit joint comportant une ouverture centrale, et une tige de soupape traversant le joint et comportant un canal de distribution débouchant par un trou radial à sa surface extérieure, ladite tige de soupape étant mobile à l'intérieur du corps de valve entre une position de repos où le trou radial débouche à l'extérieur de la chambre, et une position d'actionnement où le trou radial débouche à l'intérieur de la chambre, la tige de soupape étant sollicitée par un organe élastique vers sa position de repos, caractérisé en ce que ladite tige de soupape est moulée en un matériau comportant en mélange une résine acétal, du polytetrafluoroéthylène (PTFE) et du silicone, de sorte que ladite tige de soupape glisse avec un faible flottement sur ledit joint de soupape.

L'utilisation d'un tel matériau pour réaliser la tige de soupape permet donc d'améliorer le glissement de cette tige, notamment sur le joint de soupape. A dimensions égales de la tige de soupape et du joint de soupape, et donc à étanchéité égale, la tige de soupape de l'invention coulisse donc avec moins de frottements, ce qui évite l'apparition du blocage de la tige de soupape.

De préférence, ledit matériau de la tige de soupape est constitué de résine acétal, de PTFE et de silicone.

Avantageusement, ladite résine acétal est du polyoxyméthylène.

En particulier, le matériau de la tige de soupape comporte jusqu'à environ 25% de PTFE et jusqu'à environ 10% de silicone.

Avantageusement, le silicone est incorporé dans le matériau de la tige de soupape sous forme d'huile de silicone. Eventuellement, la tige de soupape est en outre revêtue d'une couche externe de silicone.

Selon un aspect particulier de l'invention, la valve est une valve doseuse et la chambre est une chambre de dosage délimitée axialement, du côté opposé au joint de soupape, par un joint de chambre annulaire comportant une ouverture centrale traversée par la tige de soupape. La tige de soupape de l'invention permet dans ce cas également de limiter les frottements au niveau du joint de chambre.

D'autres caractéristiques et avantages apparaîtront au cours de la description détaillée suivante de l'invention, donnée à titre d'exemple non limitatifs, en regard des dessins joints, sur lesquels :
- la figure 1 est une vue schématique en coupe d'une valve doseuse selon un mode de réalisation de la présente invention, la tige de soupape étant dans sa position de repos, et
- la figure 2 est une vue similaire à celle de la figure 1, la tige de soupape étant dans sa position d'actionnement.

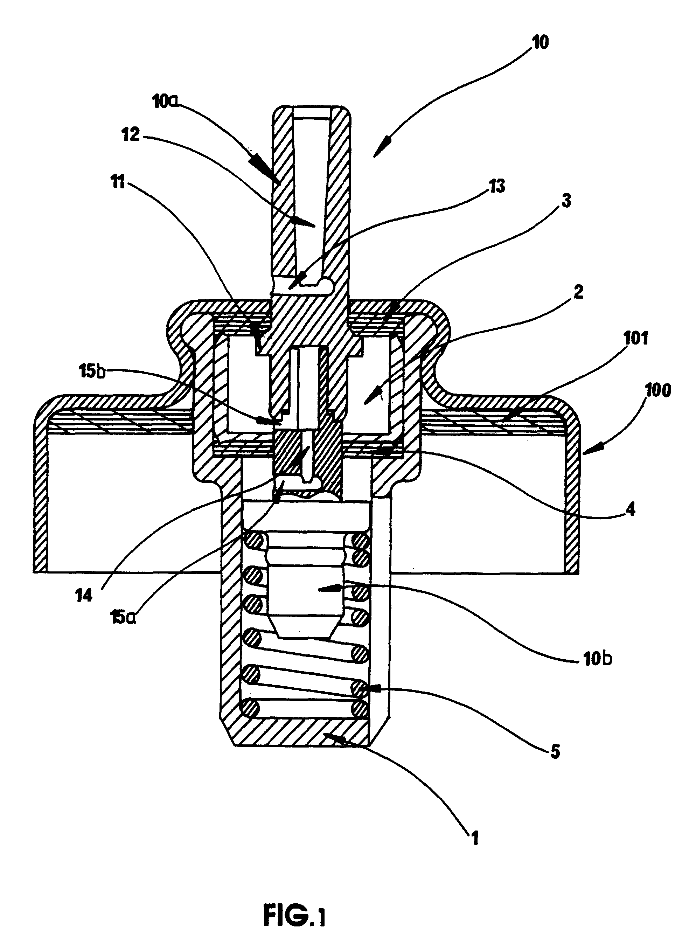

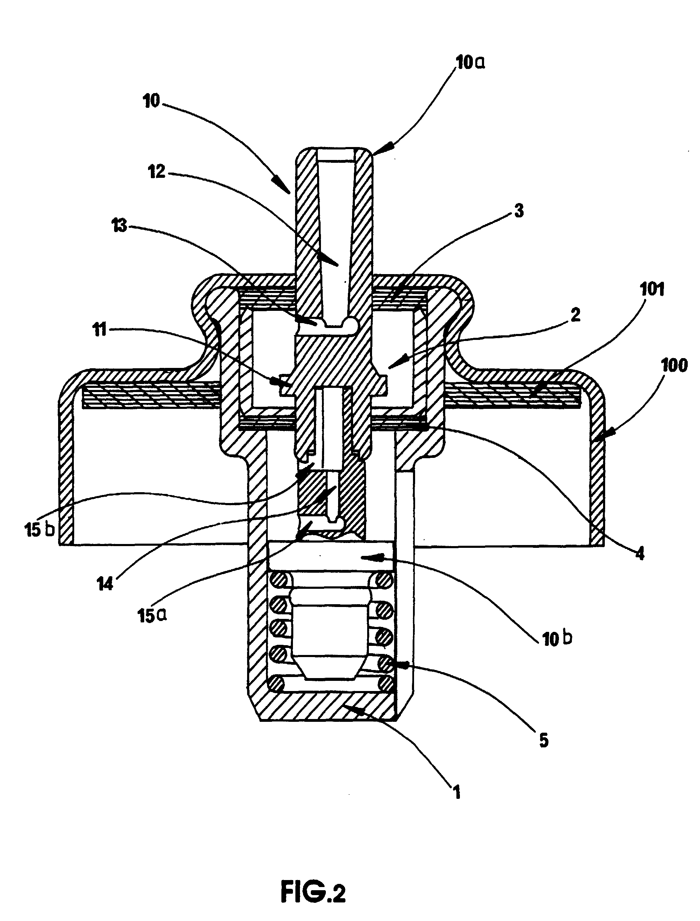

En référence aux figures 1 et 2, une valve doseuse selon l'invention comporte un corps de valve 1 renfermant une chambre de dosage 2. Cette chambre de dosage 2 est délimitée axialement par deux joints annulaires, un joint de soupape 3 et un joint de chambre 4. Ces deux joints comportent chacun une ouverture centrale à travers laquelle passe une tige de soupape 10, mobile à l'intérieur du corps de valve 1 entre une position de repos, représentée sur la figure 1, et une position d'actionnement, représentée sur la figure 2. Cette tige de soupape 10 est sollicitée vers sa position de repos par un organe élastique tel qu'un ressort 5, prenant appui d'une part sur le fond du corps de valve 1 et d'autre part sur l'extrémité inférieure de la tige de soupape.

Le corps de valve 1 est serti dans une capsule 100 qui vient ensuite se fixer, par exemple par sertissage, sur le col d'un récipient ou flacon quelconque (non représenté). Avantageusement, on prévoit un joint de col 101 entre ladite capsule 100 et ledit col du récipient.

La tige de soupape 10 comporte un élément supérieur 10a s'étendant à l'extérieur du corps de valve 1, et un élément inférieur 10b sur lequel agit ledit ressort 5.

L'élément supérieur 10a de la tige de soupape comporte un canal axial 12 débouchant par un trou radial 13 à sa surface extérieure. Dans la position de repos de la tige de soupape, ledit trou radial 13 débouche à l'extérieur du joint de soupape 3, alors que dans ladite position d'actionnement, il débouche à l'intérieur de la chambre de dosage 2.

L'élément supérieur 10a de la tige de soupape comporte en outre un épaulement radial 11 qui s'appuie sur la surface inférieure du joint de soupape 3 dans la position de repos de la tige de soupape 10, et qui définit donc ladite position de repos en agissant comme organe de butée contre la poussée du ressort 5.

L'élément inférieur 10b de la tige de soupape comporte également un conduit axial 14 et deux conduits radiaux 15a et 15b, respectivement inférieur et supérieur. Dans la position de repos de la tige de soupape, ces conduits 14, 15a et 15b relient un réservoir de produit avec la chambre de dosage 2 permettant de remplir cette dernière, alors que dans la position d'actionnement de la tige de soupape, aucun des deux conduits radiaux 15a et 15b ne débouche dans la chambre de dosage 2.

Le fonctionnement de cette valve doseuse est classique. L'utilisateur exerce une pression sur l'élément supérieur 10a de la tige de soupape 10 ce qui a pour effet de déplacer celle-ci contre la force du ressort 5 hors de sa position de repos. Dès que ce déplacement débute, le conduit radial supérieure 15b ne débouche plus dans la chambre de dosage 2 et celle-ci est alors hermétiquement fermée par ledit élément supérieur 10a de la tige de soupape au niveau du joint de chambre 4 et du joint de soupape 3. Lorsque la tige de soupape 10 parvient à sa position d'actionnement, le trou radial 13 de l'élément supérieur 10a de la tige de soupape débouche dans la chambre de dosage 2, permettant ainsi la distribution de la dose de produit contenue dans ladite chambre de dosage par l'intermédiaire du canal axial 12. L'utilisateur relâche alors sa pression sur la tige de soupape 10 qui est ramenée par le ressort 5 dans sa position de repos où le conduit radial supérieure 15b débouche dans la chambre de dosage 2, pour remplir celle-ci avec une nouvelle dose de produit.

Pour assurer le fonctionnement de la valve doseuse, et notamment le retour de la tige de soupape de sa position d'actionnement vers sa position de repos sous l'effet du ressort 5, et pour éviter des problèmes dits de "sticking", c'est-à-dire de blocage de ladite tige de soupape en raison des frottements exercés par le joint de soupape 3, l'invention prévoit de réaliser la tige de soupape 10 en un matériau dont les qualités de friction sont améliorées, c'est-à-dire qui glisse mieux sur les joints d'étanchéité. Dans ce but, l'invention prévoit de réaliser la tige de soupape 10 en un matériau comportant une résine acétal, du polytetrafluoroéthylène (PTFE) et du silicone. Plus spécifiquement, la résine acétal peut être du polyoxyméthylène et le silicone peut être présent dans le mélange sous forme d'huile de silicone. Typiquement, un matériau constitué de polyoxyméthylène, dans une proportion d'environ de 80% en poids, de PTFE dans une proportion d'environ 15% en poids et d'huile de silicone dans une proportion d'environ 5% en poids, est adapté pour réaliser la tige de soupape de l'invention. Un tel matériau existe dans le commerce (matériau KL-4540-LE de la société Engineering Plastics).

La tige de soupape 10 glissant mieux sur les joints d'étanchéité, ses dimensions extérieures peuvent donc être prévues de telle sorte qu'elle coopère avec les joints pour assurer une parfaite étanchéité, même en cas d'utilisation de gaz non nocifs tels que les HFA, tout en assurant un coulissement parfait dans l'ouverture centrale desdits joints, évitant ainsi les problèmes de blocage de la tige.

La raideur du ressort 5 devant être directement proportionnelle aux forces de frottement exercées par le joint de soupape 3, l'invention permet donc d'utiliser un ressort ayant une plus faible raideur. L'actionnement de la valve doseuse selon l'invention est donc facilitée en ce que la force nécessaire pour l'actionner est diminuée.

Un autre avantage de la tige de soupape de l'invention est qu'en raison de la diminution des forces de frottements exercées par le joint de soupape 3 sur la tige de soupape 10 lorsque celle-ci revient vers sa position de repos, la vitesse de déplacement de ladite tige de soupape est plus élevée, ce qui augmente la fiabilité de la valve.

L'invention garantit donc un fonctionnement fiable de la valve doseuse et une étanchéité totale au niveau du joint de soupape, ce qui autorise notamment l'utilisation de gaz propulseurs non nocifs pour l'environnement, tel que les gaz HFA, malgré l'augmentation importante de la pression à l'intérieur de la chambre de dosage. De plus, l'utilisation d'un ressort de plus faible raideur est rendue possible, ce qui facilite l'actionnement de la valve doseuse.

L'invention a été décrite en référence aux figures qui représentent une valve doseuse fonctionnant en position droite, mais elle s'applique évidemment aussi aux valves doseuses fonctionnant en position inversée.

## Revendications

1. Dispositif de valve destinée à être montée dans l'ouverture du col d'un récipient contenant du produit à distribuer, comportant un corps de valve (1) renfermant une chambre (2) délimitée axialement d'un côté par un joint de soupape annulaire (3), ledit joint (3) comportant une ouverture centrale, et une tige de soupape (10) traversant le joint (3) et comportant un canal de distribution (12) débouchant par un trou radial (13) à sa surface extérieure, ladite tige de soupape (10) étant mobile à l'intérieur du corps de valve (1) entre une position de repos où le trou radial (13) débouche à l'extérieur de la chambre (2), et une position d'actionnement où le trou radial (13) débouche à l'intérieur de la chambre (2), la tige de soupape (10) étant sollicitée par un organe élastique (5) vers sa position de repos, caractérisé en ce que ladite tige de soupape (10) est moulée en un matériau comportant en mélange une résine acétal, du polytetrafluoroéthylène (PTFE) et du silicone, de sorte que ladite tige de soupape (10) glisse avec un faible frottement sur ledit joint de soupape (3).

2. Dispositif selon la revendication 1, dans lequel ladite résine acétal est du polyoxyméthylène.

3. Dispositif selon la revendication 1 ou la revendication 2, dans lequel le matériau de la tige de soupape (10) comporte jusqu'à environ 25% de PTFE et jusqu'à environ 10% de silicone.

4. Dispositif selon l'une quelconque des revendications précédentes, dans lequel le silicone est incorporé dans le matériau de la tige de soupape (10) sous forme d'huile de silicone.

5. Dispositif selon l'une quelconque des revendications précédentes, dans lequel la valve est une valve doseuse et la chambre (2) est une chambre de dosage délimitée axialement, du côté opposé au joint de soupape (3), par un joint de chambre (4) annulaire comportant une ouverture centrale traversée par la tige de soupape (10), ladite tige de soupape (10) glissant avec un faible frottement sur ledit joint de chambre (4).

## Patentansprüche

1. Ventilvorrichtung, die dazu dient, in der Halsöffnung eines Behälters montiert zu werden, der ein abzugebendes Produkt enthält, wobei die Vorrichtung einen Ventilkörper (1), der eine Kammer (2) verschließt, die in axialer Richtung auf der einen Seite durch eine ringförmige Ventilverbindung (3) begrenzt wird, wobei diese Verbindung (3) eine zentrale Öffnung aufweist, sowie eine Ventilstange (10) umfaßt, die sich durch die Verbindung (3) hindurch erstreckt und einen Abgabekanal (12) aufweist, der vermittels eines radialen Loches (13) an seiner Außenfläche nach Außen mündet, wobei die Ventilstange (10) im Inneren des Ventilkörpers (1) zwischen einer Ruhelage, in der das radiale Loch (13) in den Außenraum der Kammer (2) mündet, und einer Betätigungsstellung bewegbar ist, in der das radiale Loch (13) in das Innere der Kammer (2) mündet, wobei die Ventilstange (10) durch ein elastisches Organ (5) zu ihrer Ruhelage hin vorgespannt ist, dadurch gekennzeichnet, daß die Ventilstange (10) aus einem Material geformt ist, das eine Mischung aus Acetalharz, Polytetrafluoroethylen (PTFE) und Silikon umfaßt, so daß die Ventilstange (10) mit geringer Reibung an der Ventilverbindung (3) gleitet.

2. Vorrichtung nach Anspruch 1, bei der das Acetalharz Polyoxymethylen ist.

3. Vorrichtung nach Anspruch 1 oder 2, bei der das Material der Ventilstange (10) bis zu ungefähr 25% PTFE und bis zu ungefähr 10% Silikon umfaßt.

4. Vorrichtung nach einem der vorhergehenden Ansprüche, bei der das Silikon im Material der Ventilstange (10) in Form eines Silikonöls enthalten ist.

5. Vorrichtung nach einem der vorhergehenden Ansprüche, bei der das Ventil ein Dosierventil und die Kammer (2) eine Dosierkammer ist, die auf der der Ventilverbindung (3) gegenüberliegenden Seite axial von einer ringförmigen Kammerverbindung (4) begrenzt ist, die eine zentrale Öffnung aufweist, durch die hindurch sich die Ventilstange (10) erstreckt, wobei die Ventilstange (10) in der Kammerverbindung (4) mit geringer Reibung gleitet.

## Claims

1. A valve device designed to be mounted in the neck opening of a receptacle containing a substance to be dispensed, the device comprising both a valve body (1) having therein a chamber (2) defined axially at one end by an annular valve gasket (3) including a central opening, and a valve plunger (10) passing through the gasket (3) and including a dispensing channel (12) opening out in its outside surface via a radial hole (13), said valve plunger (10) being movable inside the valve body (1) between a rest position in which the radial hole (13) opens outside the chamber (2) and an actuation position in which the radial hole (13) opens inside the chamber (2), the valve plunger (10) being urged by a resilient member (5) towards its rest position, the device being characterized in that said valve plunger (10) is molded out of a material comprising a mixture of acetal resin, polytetrafluoroethylene (PTFE), and silicone, such that said valve plunger (10) slides with low friction over said valve gasket (3).

2. A device according to claim 1, in which said acetal resin is polyoxymethylene.

3. A device according to claim 1 or claim 2, in which the material of the valve plunger (10) includes up to about 25% PTFE and up to about 10% silicone.

4. A device according to any preceding claim, in which the silicone is incorporated in the material of the valve plunger (10) in the form of silicone oil.

5. A device according to any preceding claim, in which the valve is a metering valve and the chamber (2) is a metering chamber that is axially defined at its end remote from the valve gasket (3) by an annular chamber gasket (4) having a central opening through which the valve plunger (10) passes, said valve plunger (10) sliding with low friction over said chamber gasket (4).
